# DEMANDE DE BREVET EUROPEEN

(11) **EP 1 162 842 A1**
(43) Date de publication de la demande: **12.12.2001**
(21) Numéro de dépôt: 01401441.9
(22) Date de dépôt: 01.06.2001
(51) Int. Cl.: H04N 7/16

(54) **Récepteur/décodeur de télévision à microcarte**

(30) Priorité: 06.06.2000 FR 0007258; 25.01.2001 FR 0101037
(71) Demandeur: SAGEM S.A., 75015 Paris (FR)
(72) Inventeur: Meulle, Philippe, 78300 Poissy (FR); Venom, Didier, 95400 Arnouville les Gonesse (FR)
(74) Mandataire: Schmit, Christian Norbert Marie

(57) **Abrégé**

On utilise, dans un boîtier récepteur/décodeur de télévision, un lecteur (106) de microcarte. Ce lecteur est de faibles dimensions et est placé directement sur un PCB (104) du boîtier. Le lecteur est placé à proximité d'une paroi (103) du boîtier dans laquelle on pratique une ouverture (105) afin de pouvoir introduire et retirer une microcarte dans le lecteur. La paroi comporte un embossage au niveau de l'ouverture afin de permettre le retrait 10 de la microcarte bien que celle-ci soit complètement introduite dans le parallélépipède déterminer par le boîtier. Le boîtier comporte aussi des moyens, notamment un sabot (112), pour guider la microcarte dans le lecteur lors de son introduction dans le boîtier. La microcarte comporte un onglet pour faciliter son retrait du boîtier.

## Description

L'invention a pour objet un récepteur/décodeur de télévision à microcarte. Le domaine de l'invention est celui de la télévision et des boîtiers récepteur/décodeur, aussi appelé Set Top Box (STB) ou tout simplement décodeur, associés. Un but de l'invention est de réaliser un récepteur/décodeur de télévision à faible coût. Un autre but de l'invention est de réaliser un récepteur/décodeur fortement intégré. Un troisième but de l'invention est de réaliser un récepteur/décodeur de télévision comportant de nombreux lecteurs de carte a puce.

Dans l'état de la technique on connaît des boîtiers récepteurs/décodeurs de télévision qui comportent un ou deux lecteurs de carte à puces. Ces cartes à puces sont en général à un format de type carte bancaire. C'est à dire que ces cartes ont des dimensions avoisinant 8,5 cm X 5,5 cm, et qu'elles comportent une puce ou microcircuit. Une telle carte est introduite dans le boîtier via une fente située sur une face avant du boîtier. Cette fente a alors au moins une largueur de 5,5 cm. Pour des raisons esthétiques et de protection de la carte, cette carte doit être introduite entièrement à l'intérieur du boîtier. On doit donc prévoir à l'intérieur du boîtier des moyens mécaniques pour guider cette carte afin de positionner la puce quelle comporte en face d'un lecteur de puce. Ces moyens mécaniques ont un encombrement au moins égal à la taille de la carte. Il faut donc dimensionner le boîtier en fonction du nombre de lecteurs de cartes que l'on souhaite placer dans le boîtier.

De telles cartes ont de plus une surface importante. Il est donc hors de question de leur réserver un emplacement sur le circuit imprimé comportant les composants électroniques réalisant les fonctions du décodeur. En effet, cela reviendrait à gaspiller de la place à des endroits où on pourrait placer des composants. Le lecteur de carte doit donc être situé en hauteur par rapport au circuit imprimé. Cela implique des contraintes supplémentaires dans la réalisation des décodeurs comportant de tels lecteurs.

Les décodeurs dans l'état de la technique comportant de tels lecteurs de carte à puce subissent donc des contraintes importantes lors de leur fabrication au niveau des lecteurs de cartes a puce. Ces contraintes entraînent l'augmentation de leur coût, ainsi qu'une limitation du nombre de lecteurs qu'on peut incorporer dans le boîtier. En effet, en général les décodeurs sont des boîtiers qui doivent s'intégrer dans un salon, ou dans un meuble qui à été prévu pour recevoir des éléments d'une chaîne audio au format Midi par exemple. L'encombrement des boîtiers est donc bien défini et ne peut augmenter indéfiniment.

Dans l'invention, on résout ces problèmes en utilisant une microcarte. La microcarte est une carte comportant une puce, mais la microcarte a des dimensions réduites par rapport aux cartes à puces traditionnellement utilisées pour les boîtiers récepteur/décodeur de télévision. Une telle microcarte est aussi connue sous le nom de micro-SIM ou de carte SIM plugin. Une telle carte est décrite, par exemple, dans le livre réseau GSM et DCS au chapitre 12 de la troisième édition revue et augmenté par Xavier Lagrange, Philippe Godelwski et Sami Tabanne. Les dimensions d'une telle microcarte n'excède en générale pas 4cm carré. Des dimensions classiques sont 1,5 cm X 2,5 cm. Il est donc possible de placer le lecteur d'une telle carte directement sur un circuit imprimé. Le circuit imprimé est lui-même situé à proximité des parois du décodeur ce qui permet de réaliser une fente dans cette paroi. Cette fente permet alors d'insérer et de retirer la microcarte du lecteur.

Pour faciliter les opérations d'introduction et de retrait de la microcarte, le boîtier et le lecteur comportent des moyens pour guider la micro carte lors de son introduction. Le boîtier comporte de plus un embossage au niveau de la fente permettant d'introduire la microcarte dans le boîtier. Cet embossage permet d'introduire complètement la microcarte dans le boîtier, sans pour autant qu'il y ait une aspérité sur la paroi de ce boîtier. II est aussi possible de saisir la microcarte par une de ses extrémités qui dépasse à l'intérieur de l'embossage. Cette extrémité peut comporter de plus un onglet qui permet de la saisir plus facilement, pour la retirer du lecteur et du boîtier.

L'invention a donc pour objet un dispositif boîtier récepteur/décodeur de télévision qui comporte une interface de connexion avec une carte supportant un microcircuit, caractérisé en ce que:
- la carte microcircuit est de dimensions réduites,
- l'interface de connexion est à proximité immédiate de l'une des faces du boîtier,
- la carte microcircuit est accessible directement, pour l'introduire ou la retirer, par l'extérieur du boîtier et via une fente dans ce boîtier.

L'invention sera mieux comprise à la lecture de la description qui suit et à l'examen des figures qu'il accompagne. Celles ci sont présentées à titre indicatif et nullement limitatif de l'invention. Les figures montrent :
- Figure 1 : Une illustration d'un boîtier décodeur selon l'invention.
- Figure 2 : Une illustration de détail d'un boîtier décodeur selon l'invention au niveau d'un lecteur de microcarte.
- Figure 3 : Une illustration d'un mode d'embossage possible.
- Figure 4 : Une vue de dessus d'une microcarte insérés dans un boîtier décodeur selon l'invention.
- Figure 5 et 6 : Une illustration de moyens de guidage et de maintien de la microcarte.

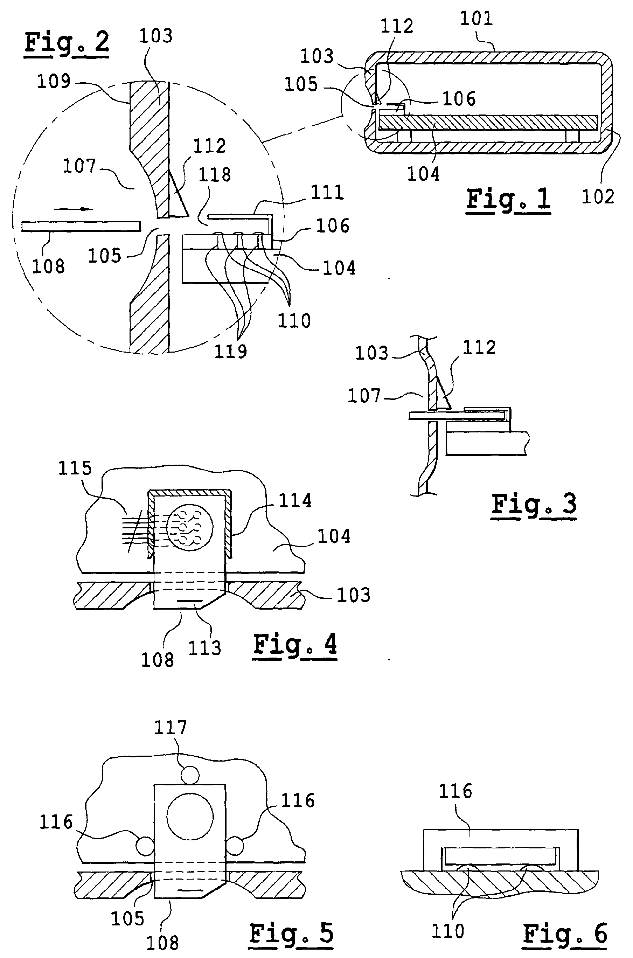

La figure 1 montre un boîtier 101 selon l'invention. Le boîtier 101 comporte une face avant 102 et une face arrière 103. Le boîtier 101 comporte aussi, à l'intérieur, un circuit 104 imprimé ou PCB 104. Le circuit 104 imprimé est fixé à l'intérieur du boîtier 101. Le boîtier 101 est par exemple un récepteur/décodeur de télévision, les composants électroniques qui sont soudés sur le PCB 104 correspondant alors aux composants mis en oeuvre pour réaliser les fonctions de réception et de décodage du boîtier 101.
La figure 1 montre que le boîtier 101 comporte sur sa face 103 arrière une fente 105. La fente 105 permet d'introduire dans le boîtier une microcarte afin que la puce, ou microprocesseur, ou microcircuit ces trois termes étant synonymes, que comporte une telle microcarte puisse être lue par un lecteur 106 fixé sur le PCB 104. Le lecteur 106 constitue l'interface de connexion entre une microcarte comportant le microcircuit et le boîtier. Le microcircuit est aussi parfois appelé puce ou microprocesseur. La microcarte comporte aussi une interface de communication ou de contact compatible avec l'interface de connexion. Le lecteur 106 est fixé à proximité immédiate de la fente 105, donc de la paroi 103 du lecteur. La proximité immédiate signifie ici quelques mm. Cela signifie aussi que l'encombrement du lecteur 106 est comparable aux dimensions de la microcarte. Le lecteur 106 peut donc être installé directement sur le PCB 104 sans qu'il en résulte une perte de surface significative au niveau du PCB 104. Le lecteur 106 est monté comme un composant électronique CMS sur le PCB 104. Le fait de pouvoir placer le lecteur directement sur le PCB dispense de plus d'avoir à utiliser des fils pour réaliser une connexion électrique entre le lecteur 106 et le PCB 104. Le lecteur 106 comporte des pattes 119 qui sont directement soudées sur le PCB 104 et en contacte électrique avec des pistes du PCB 104.

La figure 2 montre un détail de la paroi 103 du boîtier 101 au niveau de la fente 105. En particulier la figure 2 montre que la paroi 103 comporte un embossage 107. Dans l'exemple de la figure 2, l'embossage 107 est en fait un évidemment, de forme générale circulaire, de la paroi 103 au niveau de la fente 105. Cet embossage 107 permet le retrait de la microcarte une fois que celle ci est introduite dans le boîtier 101. En effet, une fois q'une microcarte 108 est introduite dans le boîtier 101, il n'y a aucune aspérité par rapport à la paroi externe 109 de la face 103 arrière du boîtier 101. Cela signifie que s'il n'y avait pas l'embossage 107 il sera alors impossible de saisir directement la microcarte 108. L'embossage 107 permet donc de laisser légèrement dépasser une extrémité de la microcarte 108 sans que cela provoque une aspérité au niveau du boîtier 101. Cette absence d'aspérité permet d'éviter que l'on accroche ou que l'on endommage la microcarte par mégarde. Classiquement une microcarte a des dimensions voisines de 1,5x2.5 centimètres carré.

La figure 3 montre une variante de réalisation de l'embossage 107. La figure 3 montre un cas de figure ou la paroi 103 n'est pas suffisamment épaisse pour réaliser un évidemment. Dans ce cas on réalise l'embossage 107 par enfoncement (emboutissage) de la paroi 103 vers l'intérieur du boîtier 101. On déforme donc la paroi 103 au niveau de la fente 105, pour obtenir l'embossage 107. L'effet technique, pour le retrait et la protection de la microcarte, est le même que celui décrit pour la figure 2.

La figure 2 montre le PCB 104 qui supporte le lecteur 106. Le lecteur 106 est directement fixé sur le PCB 104 de telle sorte que le lecteur 106 présente son entré 118 en regard de la fente 105. Le lecteur 106 comporte sur son socle, c'est à dire la partie qui est fixée sur le PCB 104, des picots 110 métalliques. Ces picots sont par exemple des lames métalliques élastiques. Ces lames métalliques soit reliées au PCB 104 par une liaison elle aussi métallique. Cela permet d'établir une liaison électrique entre les picots 110 et des pistes du PCB 104. Lorsque la microcarte 108 est introduite via la fente 105 dans le lecteur 106, celle ci déforme les picots 110 métalliques, en les enfonçant vers le PCB 104. Ces picots étant élastiques, ils repoussent alors la microcarte 108 vers le haut. Cette microcarte est maintenue contre les picots 110 par un capot 111 du lecteur 106. Lorsqu'elle est introduite dans le boîtier 101 la microcarte 108 est donc maintenue en pression contre le capot 111 du lecteur 106 par les picots métalliques 110. Cela contribue à maintenir la microcarte 108 en place une fois celle-ci introduite dans le boîtier 101. D'autre part, ces picots sont placés de telle sorte qu'ils soient en contact avec des zones métallisées de la microcarte 108. Ces zones métallisées correspondent à une interface de communication avec le microcircuit que comporte la microcarte 108. Cette interface de communication est, par exemple, normalisée. On la retrouve notamment sur les cartes bancaires. Les figures 2 et 3 montrent que la paroi interne de la face 103 arrière du boîtier 101 comporte un sabot 112. Ce sabot est situé juste au-dessus de la fente 105. Le rôle de ce sabot est de guider la microcarte 108 lors de son introduction dans l'appareil 101. Ce sabot empêche la microcarte 108 de dévier vers le haut lors de son introduction dans le boîtier 101. Ce sabot peut être soit usiné directement dans la paroi, soit fixé par collage, Ce sabot garanti le guidage de la microcarte 108 dans l'axe de la fente 105 . Celle ci sera alors correctement guidée vers l'entrée 118 du lecteur 106. La figure 4 montre la microcarte 108 introduite dans le boîtier 101. La microcarte 108 comporte, au niveau de sa partie encore accessible, lorsqu'elle est introduite dans le boîtier 101, un onglet 113. Cet onglet constitue un moyen de préhension. Cet onglet permet à l'utilisateur du boîtier 101 de retirer la microcarte 108 du boîtier 101, en la saisissant par le bout des doigts. Cet onglet 113 est par exemple réalisé par estampage en même temps que la cavité permettant d'introduire le microcircuit dans la microcarte 108.

Dans une variante de l'invention, à la place de l'onglet, il existe un orifice. Cet orifice est, par exemple, un trou de forme circulaire traversant la carte microcircuit. On utilise alors un accessoire dont on introduit l'une des extrémités dans l'orifice pour extraire la carte microcircuit de l'interface de connexion.

La figure 4 montre aussi que la microcarte 108 est introduite dans un berceau 114. La partie supérieure de ce berceau 114 n'est pas représentée sur la figure 4. Elle correspond au capot 111 de la figure 2. Le berceau 114 comporte trois parois latérales. Une de chaque côté de la carte et une paroi de fond, c'est celle qui est située le plus à l'intérieur du boîtier. La paroi de fond sert de butée limitant l'introduction de la microcarte 108 dans le boîtier 101. Les deux parois latérales servent de guide lors de l'introduction de la microcarte 108. A l'entrée 118 du lecteur 106 les parois latérales ainsi que le capot 111 sont biseautés, ou arrondies. Cela permet une introduction plus facile de la microcarte dans le lecteur 106. Lorsque la microcarte 108 est totalement introduite dans le berceau, c'est à dire lorsqu'elle est en butée contre la paroi de fond du berceau 114, l'interface de connexion du microcircuit que comporte la microcarte 108 est correctement placée par rapport aux picots 110. Les picots 110 sont connectés à un bus 115 qui permet à d'autres composants situés sur le PCB 104 de communiquer avec le microprocesseur que comporte la microcarte 108. Cette communication se fait alors via le bus 115 et les picots 110.

La figure 5 et la figure 6 montrent un autre mode de réalisation pour les moyens de guidage de la microcarte 108 lors de son introduction dans le boîtier 101. Ces moyens comportent alors un arceau 116 de section circulaire. Le fait qu'il soit de section circulaire permet de guider la microcarte 108 à l'intérieure de cet arceau lorsqu'on l'introduit dans la fente 105. Lors de son introduction la microcarte 108 est donc alors guidée par la fente 105, le sabot 112, et l'arceau 116. La microcarte 108 est maintenue en pression contre l'arceau 116 par des picots 110 élastiques. La progression de la microcarte 108 à l'intérieure du boîtier 101 est limitée par le butée 117. Cette buté 117 peut être par exemple un composant électronique fixé sur le PCB 104, auquel est également fixé l'arceau 116. Lorsque la microcarte 108 est en butée contre la butée 117 cela signifie que l'interface de communication du microcircuit que comporte la microcarte 108 est correctement positionnée par rapport aux picots 110.

Dans la description, la fente 105 et le lecteur 106 sont situés dans et à proximité de la paroi 103 arrière du boîtier 101. L'enseignement de la description reste valable quelque soit la paroi du boîtier 101 que l'on considère.

Dans une variante de l'invention, la carte (108) microcircuit comporte un premier détrompeur n'autorisant qu'un seul sens d'insertion de la carte microcircuit, l'interface (106) de connexion comportant un deuxième détrompeur de forme complémentaire au premier détrompeur. Un tel détrompeur est obtenu, par exemple, par un biseautage d'un coin de la carte (108) microcircuit. Le biseautage, et le contour interne de l'interface (106) de connexion, sont réalisés de telle manière que le contour interne de l'interface (106) de connexion épouse le contour de la carte (108) microcircuit, lorsque celle-ci est correctement introduite dans l'interface (106) de connexion. Si la carte (108) microcircuit n'est pas correctement introduite, le contour interne de l'interface (106) de connexion empêche son introduction complète, car il n'y a alors pas de concordance entre d'une part le contour de la carte (108) microcircuit, et d'autre part le contour de l'interface (106) de connexion. Cette introduction incomplète signifie aussi qu'il ne peut y avoir de contact électrique entre le microcircuit, de la carte (108) microcircuit, et l'interface (106) de connexion. Cette variante assure donc un positionnement cohérent du microcircuit vis à vis l'interface (106) de connexion.

## Revendications

1. Dispositif boîtier (101) récepteur/décodeur de télévision qui comporte une interface (106) de connexion avec une carte (108) supportant un microcircuit, **caractérisé en ce que**:
- la carte microcircuit est de dimensions réduites,
- l'interface de connexion est à proximité immédiate de l'une des faces (103) du boîtier,
- la carte microcircuit est accessible directement, pour l'introduire ou la retirer, par l'extérieur du boîtier et via une fente (105) dans ce boîtier.

2. Dispositif selon la revendication 1, **caractérisé en ce que** l'interface de connexion est un lecteur (106) de puce qui est situé directement sur la carte électronique supportant les composants électroniques réalisant les fonctions du boîtier.

3. Dispositif selon l'une des revendications 1 ou 2, **caractérisé en ce que** la carte microcircuit comporte des moyens (113) de préhension sur sa partie utilisée pour la manipuler.

4. Dispositif selon la revendication 3, **caractérisé en ce que** les moyens de préhension comporte un onglet.

5. Dispositif selon l'une des revendications 3 ou 4, **caractérisé en ce que** les moyens de préhension comporte un orifice pour y introduire un accessoire permettant de saisir la carte microcircuit.

6. Dispositif selon l'une des revendications 1 à 5, **caractérisé en ce que** le boîtier comporte sur l'une de ses faces un embossage (107), à l'endroit où se trouve l'interface de connexion, pour faciliter les manipulations de la carte microcircuit.

7. Dispositif selon l'une des revendications 1 à 6, **caractérisé en ce que** le boîtier comporte sur une face interne et au niveau de l'interface de connexion, un sabot (112) pour guider la carte microcircuit lors de son introduction dans le boîtier.

8. Dispositif selon l'une des revendications 1 à 7, **caractérisé en ce que** l'interface de connexion comporte une butée (114, 117) pour limiter la course de la carte microcircuit dans l'axe de la fente lors de son introduction dans le boîtier.

9. Dispositif selon la revendication 8, **caractérisé en ce que** la butée est réalisée par un composant d'une carte électronique du boîtier.

10. Dispositif selon l'une des revendications 1 à 8, **caractérisé en ce que** l'interface de connexion comporte des moyens (110, 111) pour plaquer des contacts du circuit microprocesseur sur des picots de l'interface de connexion.

11. Dispositif selon l'une des revendications 1 à 10, **caractérisé en ce que** l'interface de connexion comporte des moyens (105, 111, 114, 116, 117) pour guider la carte microcircuit lors de son introduction dans le boîtier.

12. Dispositif selon 'lune des revendications 1 à 12, **caractérisé en ce que** l'interface de connexion comporte des moyens (110, 111) pour maintenir la carte microcircuit en place une fois celle-ci introduite dans le boîtier.

13. Dispositif selon l'une des revendications 1 à 12, **caractérisé en ce que** la carte supportant le microcircuit à des dimensions de l'ordre de 2,5cm x 1,5cm.

14. Dispositif selon l'une des revendications 1 à 13, **caractérisé en ce que** la carte microcircuit comporte un premier détrompeur n'autorisant qu'un seul sens d'insertion de la carte microcircuit, l'interface de connexion comportant un deuxième détrompeur de forme complémentaire au premier détrompeur.
